# EUROPEAN PATENT APPLICATION

(11) **EP 2 947 549 A1**
(43) Date of publication of application: **25.11.2015**
(21) Application number: 15168386.9
(22) Date of filing: 20.05.2015
(51) Int. Cl.: G06F 3/01, G06F 3/0481

(54) **APPARARTUS AND METHOD FOR NAVIGATING THROUGH VOLUME IMAGE**

(30) Priority: 20.05.2014 KR 20140060558
(71) Applicant: Samsung Electronics Co., Ltd, Gyeonggi-do 443-742 (KR)
(72) Inventor: RYU, Seung Woo, Seoul (KR); SEONG, Yeong Kyeong, unknown (KR)
(74) Representative: Grünecker Patent- und Rechtsanwälte PartG mbB

(57) **Abstract**

Disclosed are an apparatus for navigating through a volume image and a method thereof. The apparatus for navigating through a volume image includes a navigation plane detecting unit configured to generate a virtual plane in a navigation coordinate system in a real world from user gesture data and determine the virtual plane as a navigation plane, an extracting unit configured to extract a 2D sectional image corresponding to the navigation plane from 3D volume data, based on a reference surface of a volume coordinate system of a virtual world corresponding to a reference surface of the navigation coordinate system, and a display unit configured to display the extracted sectional image.

## Description

### 1. Field

The following description relates to a technology for navigating through a volume image, a technology for navigating through a volume image to obtain a sectional image of the volume image, and an apparatus and method for navigating sectional images of a volume image.

### 2. Description of Related Art

In a 3D ultrasonic image technology, a 3D image (hereinafter, also referred to as a "volume image") may be acquired by directly photographing an object using a 3D probe, or by combining successive 2D images photographed using a 2D probe. The 3D ultrasonic image has benefits of showing the exterior of a volume image at various view points, and also showing sectional images (hereinafter, also referred to as "slices") in various orientations at a desired position inside the volume image. However, the 3D ultrasonic image is a set of dots having gray scales, thus making it difficult to check the interior thereof other than the exterior thereof. Accordingly, in order to check the inside thereof, a sectional image corresponding to a slice of the 3D image needs to be viewed. Different from simply viewing a 2D image having a fixed orientation, a 3D image needs to be viewed with respect to a sectional image having a random orientation in a 3D space. In addition, whenever necessary, a sectional image of a current orientation needs to be switched into a sectional image of another orientation desired to be viewed. However, it is very cumbersome and complicated for a user to select or change the orientation of the 2D plane that slices a volume image to produce a sectional image at a certain location within the volume image in a 3D space by use of a keyboard or a mouse.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided an apparatus for navigating through a volume image, the apparatus including a navigation plane detecting unit configured to generate a virtual plane in a navigation coordinate system in a real world from user gesture data, and determine the virtual plane as a navigation plane, an extracting unit configured to extract a 2D sectional image corresponding to the navigation plane from 3D volume data, based on a reference surface of a volume coordinate system of a virtual world corresponding to a reference surface of the navigation coordinate system, and a display unit configured to display the extracted sectional image.

The user gesture data may include data obtained by detecting a motion of a user's hand via a sensor provided at a fixed location.

The user gesture data may include data obtained by detecting an orientation of a handheld device held by a user's hand via a sensor provided in the handheld device.

The handheld device may be provided in the form of an ultrasonic imaging probe, and the navigation plane may be generated by the handheld device at a location similar to that of an image which is photographed by the ultrasonic imaging probe.

The handheld device may be provided in the form of an ultrasonic imaging probe. The handheld device may be used to provide for a user gesture of making contact with a phantom having a 3D shape corresponding to the volume data. The navigation plane may be generated at a sectional location of the phantom corresponding to the volume data.

The reference surface of the navigation coordinate system and the reference surface of the volume coordinate system may be correlated by associating a navigation reference surface determined by a navigation plane determined based on the user gesture in the navigation coordinate system with a volume reference surface determined by a sectional image among sectional images of the volume data in the volume coordinate system.

In another general aspect, there is provided a method of navigating through a volume image, the method involving generating a virtual plane in a navigation coordinate system in a real world from user gesture data detected by a sensor, and determining the virtual plane as a navigation plane, extracting a 2D sectional image corresponding to the navigation plane from 3D volume data, based on a reference surface of a volume coordinate system of a virtual world corresponding to a reference surface of the navigation coordinate system, and displaying the extracted sectional image.

The user gesture data may include data obtained by detecting a motion of a user's hand via a sensor provided at a fixed location.

The sensed user gesture data may include data obtained by detecting an orientation of a handheld device held by a user's hand via a sensor provided in the handheld device.

The handheld device may be provided in the form of an ultrasonic imaging probe. The navigation plane may be generated by the handheld device at a location similar to that of an image which is photographed by the ultrasonic imaging probe.

The handheld device may be provided in the form of an ultrasonic imaging probe. The handheld device may be used to provide for a user gesture of making contact with a phantom having a 3D shape corresponding to the volume data. The navigation plane may be generated at a sectional location of the phantom corresponding to the volume data.

The reference plane of the navigation coordinate system and the reference surface of the volume coordinate system may be correlated by associating a navigation reference plane determined by a navigation plane determined based on the user gesture in the navigation coordinate system with a volume reference surface determined by a sectional image among sectional images of the volume data in the volume coordinate system.

In another general aspect, there is provided an apparatus for navigating through a volume image, the apparatus including a sensor configured to detect a gesture to obtain coordinates of a navigation plane, a processor configured to obtain the coordinates of the navigation plane based on the detected gesture and extract a 2D sectional image of a 3D volume image based on the coordinates, and a display configured to display the extracted sectional image.

The sensor may include a depth camera.

The sensor may be disposed within a handheld device and may be configured to detect an orientation of the handheld device.

The sensor may be configured to detect the coordinates of the navigation plane based on an orientation of a palm or one or more finger of a user's hand.

The sensor may be configured to detect a change in the orientation of the palm or the one or more finger; and the processor is configured to extract another 2D sectional image of the 3D volume image based on the change of the orientation.

Other features and aspects will be apparent from the following detailed description, the drawings, and the claims.

### BRIEF DESCRIPTION OF THE DRAWINGS

FIG. 1 is a block diagram illustrating a conventional volume image navigating apparatus.
FIG. 2 is a view illustrating an example of a method of navigating through a volume image to obtain a sectional image.
FIG. 3 is a block diagram illustrating an example of an apparatus for navigating sectional images of a volume image in accordance with the present disclosure.
FIG. 4 is a view illustrating an example of a method of navigating sectional images of a volume image in accordance with the present disclosure.
FIG. 5 is a view illustrating an example of a method of using a user gesture with an apparatus for navigating sectional images of a volume image in accordance with an example of the present disclosure.
FIG. 6 is a view illustrating another example of a method of using a user gesture with an apparatus for navigating sectional images of a volume image in accordance with an example of the present disclosure.
FIG. 7 is a view illustrating another example of using a user gesture with an apparatus for navigating sectional images of a volume image in accordance with the present disclosure.
FIG. 8 is a view illustrating another example of using a user gesture with an apparatus for navigating sectional images of a volume image in accordance with the present disclosure.
FIG. 9 is a view illustrating an initialization of the process of determining a reference surface in an apparatus for navigating sectional images in accordance with an example of the present disclosure.
FIG. 10 is a flowchart showing an example of a method of navigating sectional images of a volume image in accordance with the present disclosure.
FIG. 11 is a flowchart showing an example of an initialization process in a method of navigating sectional images of a volume image in accordance with an example of the present disclosure.
FIG. 12 is a flowchart showing another example of an initialization process in a method of navigating sectional images of a volume image in accordance with an example of the present disclosure.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following description is provided to assist the reader in gaining a comprehensive understanding of the methods, apparatuses, and/or systems described herein. However, various changes, modifications, and equivalents of the systems, apparatuses and/or methods described herein will be apparent to one of ordinary skill in the art. The progression of processing steps and/or operations described is an example; however, the sequence of and/or operations is not limited to that set forth herein and may be changed as is known in the art, with the exception of steps and/or operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

Hereinafter, a volume image navigation technology according to embodiments of the present disclosure will be described in detail with reference to the accompanying drawings.

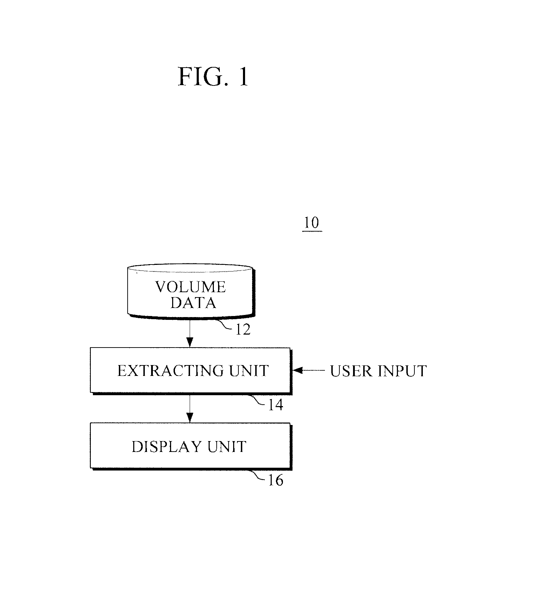

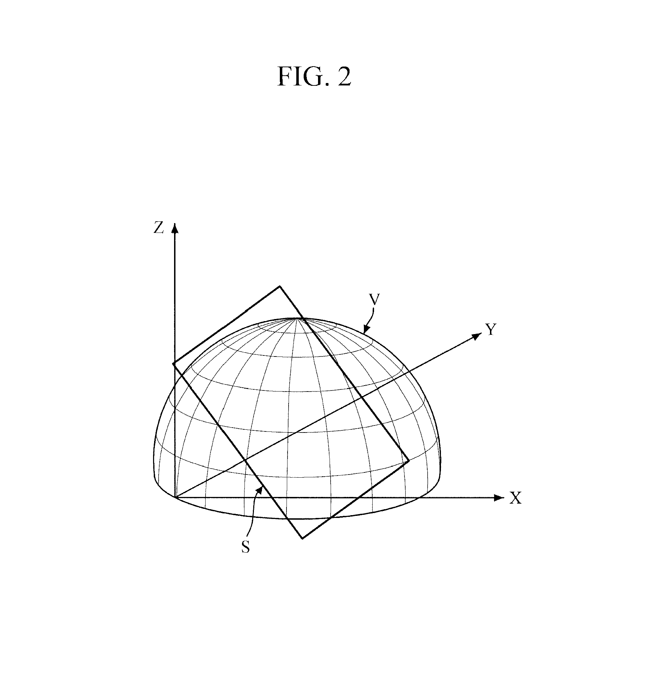

A conventional volume image navigation apparatus will be described with reference to FIGS. 1 and 2. FIG. 1 is a block diagram illustrating a configuration of the conventional volume image navigating apparatus. FIG. 2 is a view illustrating an example of a method of navigating sectional images of a volume image.

Referring to FIG. 1, an apparatus for navigating sectional images of a volume image 10 may include volume data 12, a sectional image extracting unit 14 and a display unit 16. The volume image 10 may be a medical image obtained from a medical imaging technology such as ultrasound, CT scan and the like. The apparatus 10 may be implemented using a computing device including a processor, a memory and a user input/output device. A user may designate a certain slice included in a certain volume data such that a sectional image of the designated slice is displayed on a display by use of an input device, such as a keyboard or a mouse. When slice information desired by a user is input, the sectional image extracting unit 14 may extract a sectional image of the designated slice from the volume data 12 stored in the memory. Thereafter, the display unit 16 may display the extracted sectional image on a display device.

According to the conventional navigation apparatus as such, a user may designate a certain slice corresponding to a 2D plane that cuts through a volume image by use of a key board or a mouse. In FIG. 2, a volume image V having a semispherical shape and a sectional image S having a rectangular shape S are illustrated. The shapes of the volume image and the sectional image are provided for illustrative purposes only. In order to designate a sectional image S within a volume image V, a user needs to designate a 2D plane having an orientation and location that corresponds to a desired sectional image S in a 3D coordinate system. FIG. 2 illustrates a coordinate system represented by the X-axis, the Y-axis and the Z-axis that are perpendicular to each other. However, a process of switching between sectional images S of various orientations to navigate through the volume image V to obtain a desired sectional image in the 3D coordinate system is complicated; in order to learn the relevant method, a great amount of effort is required. Accordingly, there is a need of technology that enables a user to easily navigate through a 3D volume image to obtain the desired 2D sectional image.

The navigation technology according to embodiments of the present disclosure has a configuration in which sectional images of a volume are navigated based on a navigation plane formed by a gesture of a user. Accordingly, a user is provided with a convenience that a sectional image having a desired orientation is easily obtained at a desired location through a gesture using a hand or a tool regardless of a complicated coordinate system.

According to an embodiment of the present disclosure, a user may designate a navigation plane formed by any two fingers of one hand of the user extending in different directions by using a gesture of opening the two fingers in different directions. Such a user gesture may be detected by a sensing device, for example, a leap motion sensor, installed on a fixed location. The leap motion sensor is a generally known sensor that senses a motion of an object, such as a hand of a human, in a 3D space by use of infrared rays and a depth sensor. The sensing device may detect direction vectors corresponding to the two fingers of the user. Thereafter, a plane is determined based on the detected two direction vectors. In other words, the detected two direction vectors may be converted into two straight lines meeting at one point, and by the two straight lines, a single plane is determined, which is a well-known mathematic theory. Accordingly, the plane determined by the directions of the two fingers may be determined as a navigation plane designated by a user.

The minimum conditions for determining a random 2D plane in a 3D space involves specifying: (1) different three points that do not exist on one straight line; (2) one straight line and one point that does not exist on the one straight line; (3) two straight lines meeting at one point; (4) two straight lines extending in parallel to each other without meeting each other, and so on. If one of the above conditions is detected from a random gesture using fingers of a user, the orientation of one plane is determined.

In the above example, the direction of a finger may be detected by use of an additional motion sensor, such as a leap motion sensor, to sense a shape or motion of fingers of a user. In an alternative example, the direction of a finger of a user may be detected by allowing the user to make a gesture of a hand while wearing a globe provided with a sensor configured to sense the direction of a finger.

According to another embodiment of the present disclosure, a user may designate a navigation plane corresponding to a palm of the user other than fingers of the user by using a gesture of opening fingers to be flat. Similar to the sensing of the fingers, such a user gesture may be also detected by an additional sensor to sense a palm or by a sensor provided on a globe to sense the palm. The sensor may detect a plane corresponding to a palm of a user. For example, the sensor may detect different three points on a palm of a user, and generate a single plane by use of the three points, thereby detecting a plane corresponding to the palm. Thereafter, the detected plane may be determined as a navigation plane designated by a user.

According to another example of the present disclosure, a user may designate a navigation plane through a gesture using a handheld unit configured to facilitate generation of a navigation plane. For example, a user may hold a handheld unit and make a gesture of maintaining a pose having a desired orientation. The handheld unit is provided therein with one or more sensor, such as an acceleration sensor and a gyroscope sensor, to detect a pose of the handheld unit. As an example, the sensor may detect a pose of the handheld unit by detecting that a pose of the handheld unit is maintained for a predetermined time duration within an allowable error. As another example, the sensor may detect a pose of the handheld unit by detecting a pose of the handheld unit as soon as a navigation plane detection command is received from an additional user input device. Thereafter, a plane having an orientation corresponding to the detected pose is determined, and the plane may be determined as a navigation plane desired to be designated by the user.

According to an embodiment of the present disclosure, the handheld unit may be implemented using a handheld device including a man body gripped by a user's hand, a sensor to detect a pose of the main body, and a communication unit to transmit information detected by the sensor to another component. Alternatively, the handheld unit may be implemented using a handheld mobile terminal, such as a smartphone. In this case, the handheld mobile terminal may be a computing device provided with a pose detection sensor and a near field communication (NFC) device, such as Bluetooth, and provided with an application configured to perform navigation plane detection related tasks

According to another embodiment of the present disclosure, the handheld unit may be a handheld type probe used to acquire an ultrasonic image, or a handheld device having a shape similar to that of a probe. For example, in medical diagnosis fields using an ultrasonic imaging, a probe used to acquire an ultrasonic image may be implemented as a handheld unit. In this case, a navigation plane determined by a pose of a probe may be provided to have an orientation corresponding to a 2D ultrasonic image captured by the probe. This embodiment provides a user experience as if a volume image is navigated in a similar manner that a human body is navigated through a probe during an ultrasonic imaging.

According to another embodiment of the present disclosure, a model copying the shape of an organ of a human body, that is, a phantom may be additionally used together with the handheld unit. In this embodiment, the user may allow the handheld unit to make contact with a surface of a phantom having a shape of a heart or breasts while holding the handheld unit by his or her hand, and designate a navigation plane representing a certain cross section of the phantom. The volume image has a form in a virtual world representing a certain organ of a human body, while the phantom has a form in a real world representing a certain organ of a human body. For example, when a user makes a gesture of designating a navigation plane having a certain orientation after allowing a probe to make contact with a certain location of a phantom, a sectional image corresponding to the navigation plane at a location of a volume image corresponding to the certain location of the phantom is obtained and displayed on the screen.

Here, the size or the shape does not need to be exactly same between the phantom and the volume image. For example, in an initialization process, the volume image may correspond to the phantom by matching an interval between sectional images of a volume image to a distance moved by a probe on the surface of a phantom. The use of a phantom may prevent handshaking errors that may be generated when a user designates a navigation plane in an empty space. In addition, a certain location of a phantom may be used as an explicit reference point, so there is no need to remember a reference point, which allows an unskilled person to easily navigate to a sectional image.

The volume image navigation technology provided by the embodiments of the present disclosure as such allows a sectional image corresponding to a certain navigation plane in a 3D space to be selected and displayed by using a simple user gesture, and also allows the angle and location of the navigation plane displayed to be easily changed.

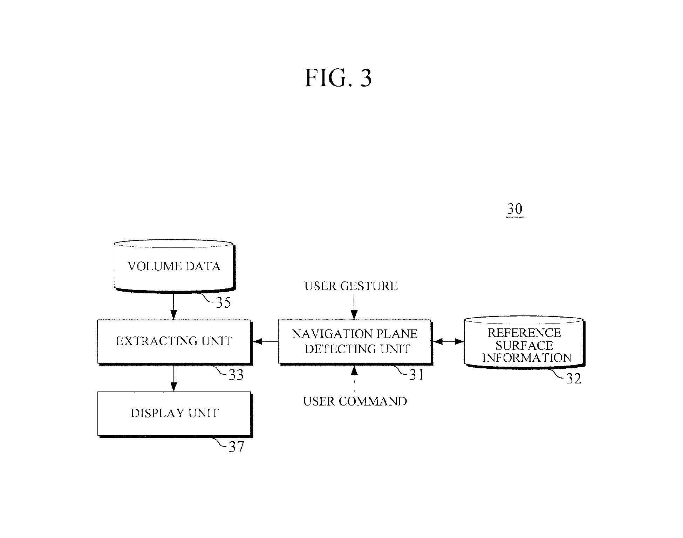

Hereinafter, an apparatus for navigating sectional images of a volume image according to embodiments of the present disclosure and a method thereof will be described with reference to FIGS. 3 to 12. However, the embodiments are illustrative purpose only, and it would be appreciated by those skilled in the art that changes and modifications may be made in these embodiments without departing from the principles and scope of the invention, the scope of which is defined in the claims and their equivalents.

FIG. 3 is a block diagram illustrating an example of an apparatus for navigating sectional images of a volume image in accordance with the present disclosure. As shown in FIG. 3, an apparatus for navigating sectional image of a volume image 30 includes a navigation plane detecting unit 31, reference surface information 32, an extracting unit 33, volume data 35, and a display unit 37. The extracting unit 33 may include a computer processor.

A user may designate a navigation plane having a certain orientation by use of a gesture using a hand or a gesture using a tool. If necessary, a user may input a user command by use of an input device, such as a keyboard or a mouse. The navigation plane designated by a user may be detected by a navigation plane detecting unit 31. The detected navigation plane is provided to the extracting unit 33, and the extracting unit 33 may extract a sectional image corresponding to the navigation plane from the volume data 35. The volume data 35 may be stored in a non-transitory memory, and may include 3D ultrasonic image data about an organ or a tissue of a human body. As a sectional image representing a certain cross section of a volume data is extracted from the volume data 35 by the extracting unit 33, the sectional image may be visually displayed by the display unit 37.

In this example of an apparatus for navigating sectional images of a volume image 30, a user may navigate to a cross section (a sectional image) of a 3D image (a volume image) by specifying a navigation plane through a user gesture. The navigation plane represents a virtual plane designated by a user. The location and the orientation of a navigation plane in the real world correspond to the location and the orientation of a sectional image of a volume image that is a 3D digital image data in a virtual world.

To this end, at least one sectional image among sectional images of a volume image needs to be determined as a volume reference surface, and at least one navigation plane among navigation planes needs to be determined as a navigation reference surface. According to the embodiment, information about the volume reference surface and the navigation reference surface are included in the reference surface information 32. If the volume reference surface and the navigation reference surface are determined, the location and the orientation of a navigation plane based on the navigation reference surface correspond to the location and the orientation of a sectional image based on the volume reference surface. Accordingly, when a random navigation plane is designated by a user gesture, the designated navigation plane is detected, and a sectional image corresponding to the detected navigation plane is extracted and displayed. Thereafter, if a user gesture is changed and thus a navigation plane having a different location and a different orientation is designated, a sectional image changed while corresponding to the change of the navigation plane is extracted and displayed. In this manner, according to the embodiment of the present disclosure, a desired sectional image in a volume image is freely navigated by changing a user gesture.

The volume reference surface may be included in the reference surface information 32 as a default value that is set in advance by an apparatus producer. For example, when a volume image is displayed in a coordinate system composed of the X-axis, the Y-axis and the Z-axis, a sectional image corresponding to a central vertical plane of a shape of the displayed volume image, that is, the X-Z plane may be stored as a default reference surface. Similarly, the navigation reference surface may be previously determined as a vertical plane having the same location as that of a first navigation plane determined in the system initialization stage among vertical planes parallel to the gravity direction.

The volume reference surface and the navigation reference surface may be determined by a user in the beginning of the navigation. For example, a user may display a certain sectional image on the screen, and by matching the sectional image to a navigation plane designated by a user gesture, a volume reference surface and a navigation reference surface may be determined.

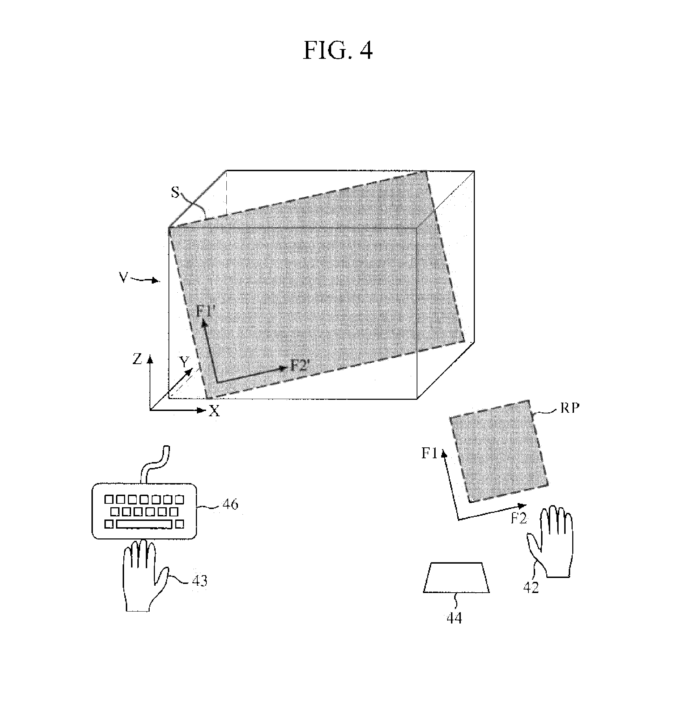

FIG. 4 is a view illustrating an example of a process of navigating through a volume image to obtain a sectional image in accordance with the present disclosure. As illustrated in FIG. 4, a user designates a navigation plane by use of his or her one hand, and inputs a command by manipulating a keyboard using the other hand, thereby navigating to a sectional image of a volume image. First, a user may make a gesture of designating a navigation plane RP in a space above or in front of a sensor 44 by use of one hand 42 of the user. Thereafter, the sensor 44 detects fingers or a palm of the hand 42 of the user or other tools, thereby detecting two direction vectors F1 and F2. The detected F1 and F2 may be used to calculate the location and the orientation of the navigation plane RP designated by the user. The user may input a command to select a volume image V that is displayed on the screen by manipulating a key board 46 using the other hand 43 of the user before/after the detection of the navigation plane RP or at the same time of the detection of the navigation plane RP. Accordingly, with respect to the selected volume image V, a sectional image S of the volume image corresponding to the navigation plane RP is displayed. Since the sectional image S corresponds to a 2D plane within the volume image V, two directions F1' and F2' of the sectional image S may correspond to the two directions F1 and F2 of the navigation plane RP, respectively.

As such, in one example, a user may designate a random navigation plane by using a gesture of opening two fingers of the user in directions substantially perpendicular to each other or opening two fingers in other different directions, respectively. In this state, the user, by intuitively rotating or moving the direction or the location of the hand 42 including the two fingers, may easily and freely change the direction and the location of a sectional image S displayed on the screen.

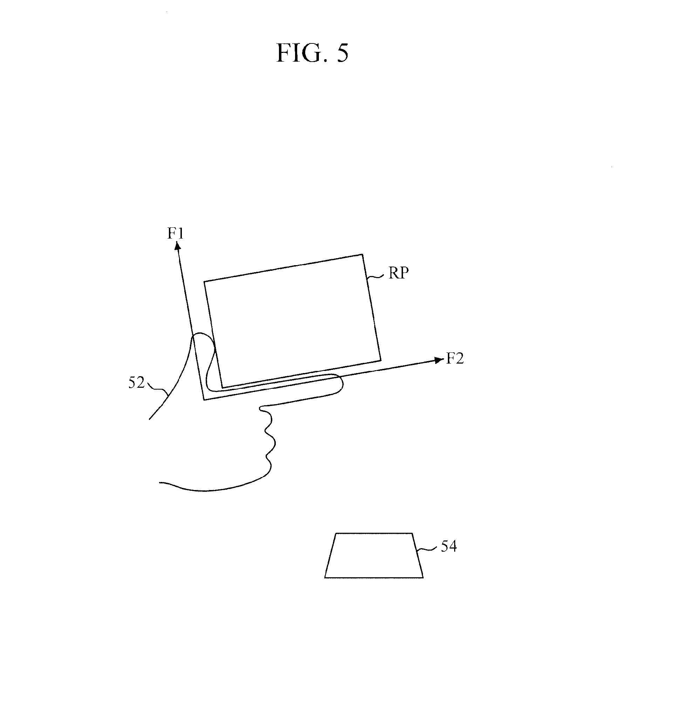

FIG. 5 is a view illustrating an example of a method of using a user gesture in an apparatus for navigating sectional images of a volume image in accordance with an embodiment of the present disclosure. In FIG. 5, a user gesture of opening a thumb and an index finger of one hand 52 in substantially perpendicular directions is used to form a navigation plane RP. The form of the hand or the directions of the fingers of the user may be detected by a sensor 54. The sensor 54 may be configured to detect a motion of a finger in a 3D space by use of infrared rays and a depth camera, for example, a leap motion sensor. Based on the directions of two fingers of a user or the positions of three points detected from two fingers, two direction vectors (or straight lines) F1 and F2 to form a navigation plane RP may be determined.

Although F1 and F2 are illustrated as straight lines crossing each other in this embodiment, and throughout the specification, F1 and F2 do not need to cross each other as long as they are straight lines to determine one plane.

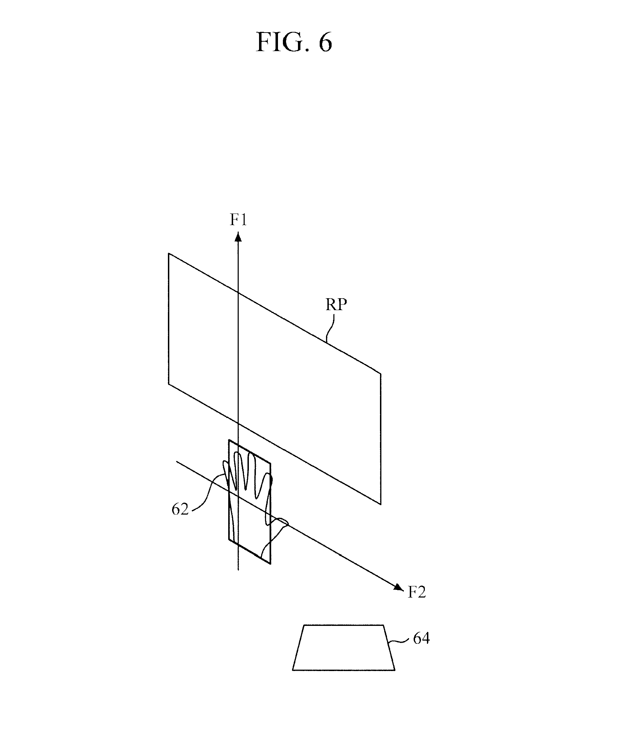

FIG. 6 is a view illustrating another example of a user gesture used with an apparatus for navigating through a volume image to obtain a sectional image. On FIG. 6, an example of a user gesture of opening fingers and forming a palm of one hand 62 of the user to be substantially flat to define a navigation plane RP. The form of the hand 62 or the directions of the fingers of the user may be detected by a sensor 64. The sensor 64 may be configured to detect a motion of fingers or a palm in a 3D space by use of infrared rays and a depth camera, for example, a leap motion sensor. Based on the form or the directions of fingers and a palm of a user or based on the positions of three points detected from fingers and a palm, two direction vectors (or straight lines) F1 and F2 to form a navigation plane RP may be determined.

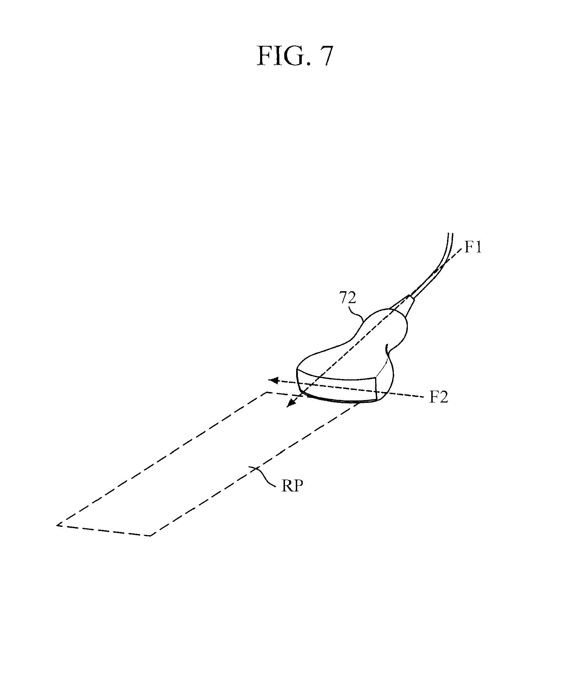

FIG. 7 is a view illustrating another example of a method of using a user gesture in an apparatus for navigating sectional images of a volume image in accordance with an embodiment of the present disclosure. On FIG. 7, an example of a user gesture forming a navigation plane RP determined by two axes F1 and F2 of a handheld device 72 that is gripped by a user's hand is illustrated. The two axes F1 and F2 of the handheld device 72 are fixed with respect to the handheld device 72. Accordingly, the locations and the directions of the two axes F1 and F2 are determined depending on a pose of the handheld device 72. A user may form a navigation planes RP having various locations and orientations by moving or rotating the handheld device 72 while holding the handheld device 72. With respect to a coordinate system outside the handheld device 72 (that is, a volume coordinate system or a navigation plane coordinate system), the locations and the directions of the two axes F1 and F2 may be sensed by a sensor installed in the handheld device 72, for example, an acceleration sensor and a gyroscope sensor. The volume coordinate system represents a coordinate system that specifies a volume image and sectional images of the volume images displayed on a display screen. Meanwhile, the navigation coordinate system represents a real world coordinate system that is set corresponding to the volume coordinate system.

The handheld device 72 may further include a wired/wireless communication unit to transmit information sensed by a sensor to an external device, for example, the apparatus shown in FIG. 3, in addition to the sensor to sense the locations and the directions of the fixed axes F1 and F2 configured to determine a navigation plane RP. As illustrated on FIG. 7, the handheld device 72 may have a shape similar to that of a probe for 2D ultrasonic imaging. Alternatively, the handheld device 72 configured to form a navigation plane RP may be implemented using a probe for 2D ultrasonic imaging. The configuration of the handheld device 72 is not limited as long as the handheld device 72 includes a main body manipulated by a user while being held by a user's hand, two axes F1 and F2 fixed to the main body, a sensor to sense the locations and directions of the two axes and a communication unit. Therefore, the handheld device 72 may be implemented using a mobile computing device, such as a smartphone, or an additional exclusive device.

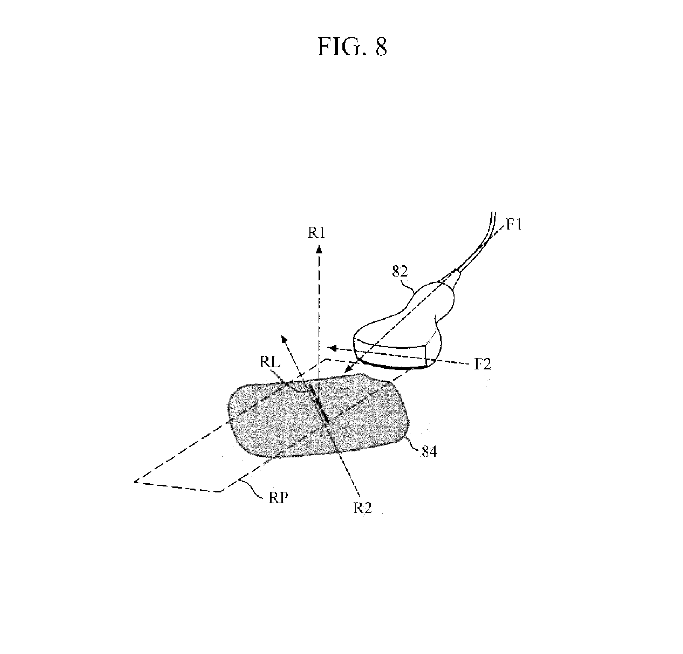

FIG. 8 is a view illustrating another example of a method of using a user gesture in an apparatus for navigating sectional images of a volume image in accordance with an embodiment of the present disclosure. On FIG. 8, an example of a user gesture forming a navigation plane RP determined by two axes F1 and F2 of a handheld device 82 gripped by a user's hand is illustrated. The handheld device 82 includes a main body manipulated by a user while being held by a user's hand, two axes F1 and F2 fixed to the main body, a sensor to sense the locations and directions of the two axes and a communication unit. In this example, a user moves the handheld device 82 using a phantom 84 without moving the handheld device 82 in the empty space.

The phantom 84 is a model widely used in the medical fields, and in general, represents a plastic product modeled from one of various organs of the human body. A user may move the handheld device 82 in such a manner that a navigation plane RP generated by the handheld device 82 cuts through the phantom 84. The phantom 84 may be provided at a certain location thereof with a reference line RL. Two axes R1 and R2 for the reference line form one plane, which allows a navigation reference surface to be easily determined in the navigation plane coordinate system.

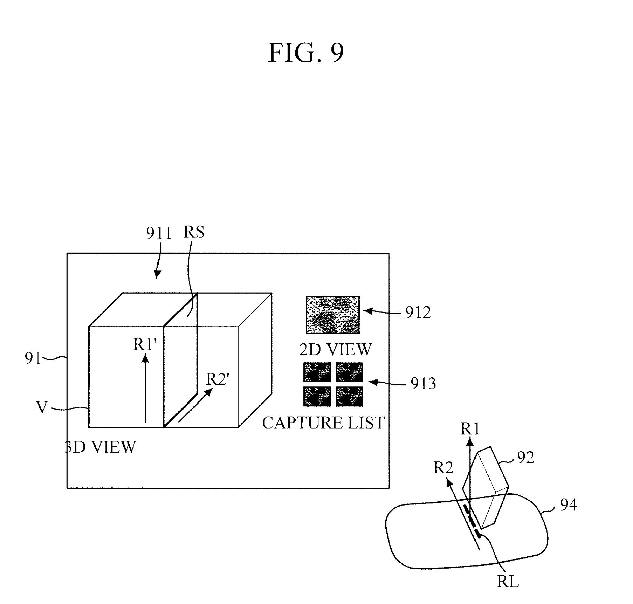

FIG. 9 is a view illustrating an initialization of determining a reference surface in an apparatus for navigating sectional images of a volume image in accordance with an embodiment of the present disclosure. According to the example illustrated in FIG. 9, a user may determine one of sectional images of a volume image V on a display screen 91 as a reference surface RS by use of a handheld device 92 and a phantom 94.

Referring to FIG. 9, the display screen 91 may be an example of a screen being displayed by the display unit 37 of the volume image navigation apparatus 30 of FIG. 3. The screen 91 may include a 3D view section 911 showing a volume image V and/or sectional images in a 3D representation, a 2D view section 912 showing a sectional image selected by a user gesture in a 2D representation, and a capture list section 913 showing reduced images of captured sectional images among sectional images seen by the user. The configuration of the screen is provided only as an example, and the screen may be provided in various configurations.

A user may allow the handheld device 92 to make contact with a reference line RL of the phantom 94, so that a navigation plane determined by a straight line R2 parallel to the reference line RL of the phantom 94 and a straight line R1 perpendicular to the straight line R2 is detected by a sensor provided in the handheld device 92. The detected navigation plane may correspond to a reference surface RS that is vertically provided in the center of the volume image V on the display screen 91. As such, the use of the phantom 94 enables a navigation reference surface to be easily identified, and enables the volume reference surface and the navigation reference surface to be easily matched to each other.

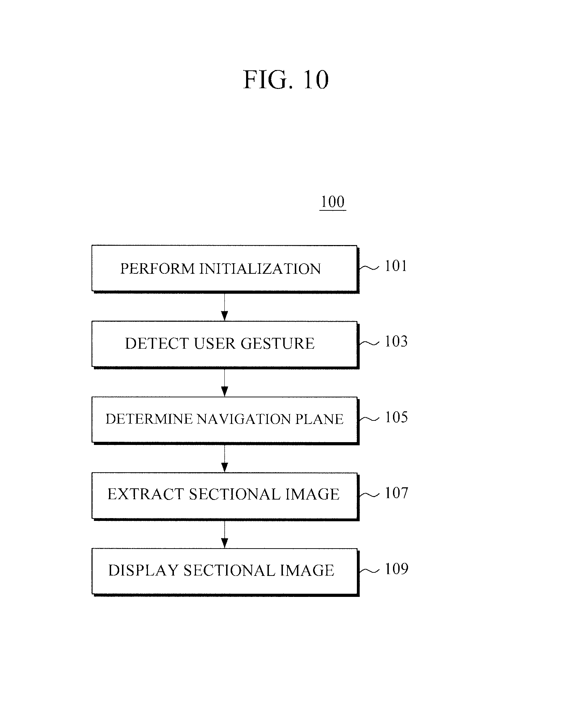

FIG. 10 is a flowchart showing an example of operations of a method 100 of navigating sectional images of a volume image in accordance with an embodiment of the present disclosure. First, an initialization process is performed before navigation starts (101).

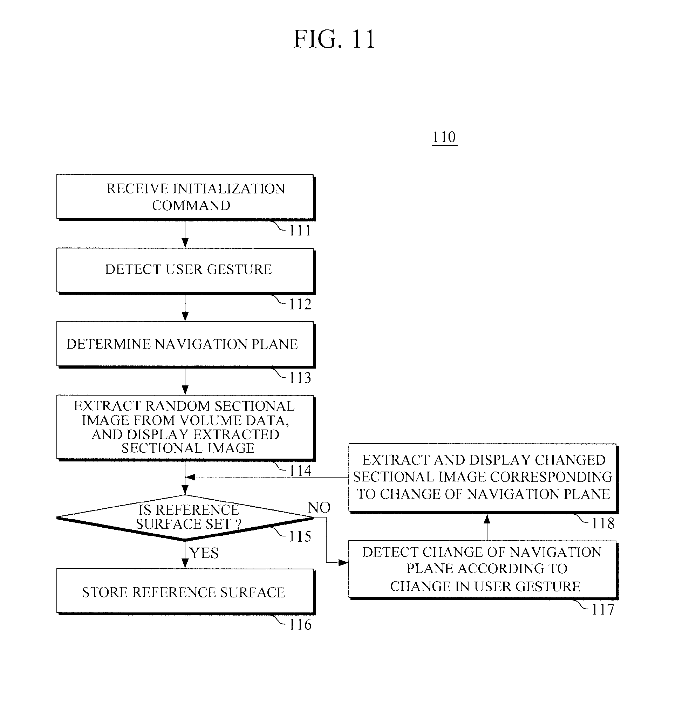

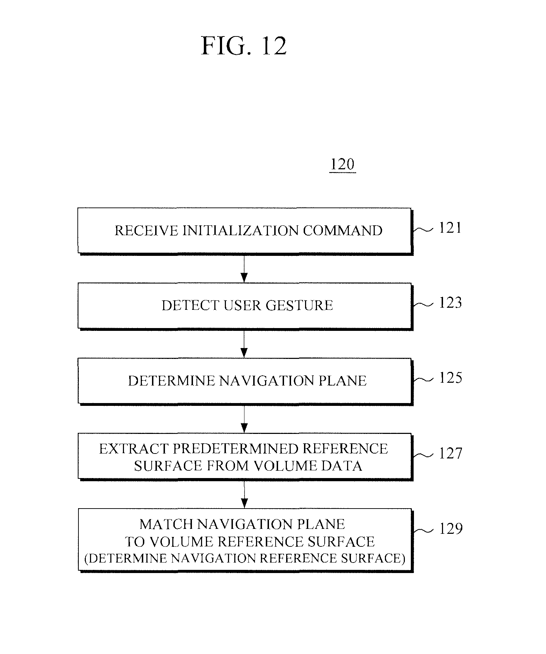

As shown in FIG. 10 in conjunction with FIGS. 11 and 12, the initialization process (101) is a process of associating a digital virtual world coordinate system, that is, a 3D volume coordinate system, on which a volume image and sectional images are represented, with a real world coordinate system, that is, a 3D navigation coordinate system, on which a navigation plane is detected. Once the volume coordinate system is associated with the navigation coordinate system, a plane detected in the navigation coordinate system is associated with a plane in the volume coordinate system.

After the initialization, a user gesture is detected (103). A user gesture is a gesture made by a user by using one hand to form a navigation plane to navigate through a volume image to a sectional image of the volume image. For example, a user may make a gesture of opening two fingers, a gesture of opening a palm to be flat, a gesture of scanning an imaginary volume image while holding a probe for ultrasonic image capturing, or a gesture of scanning a phantom using a smartphone, to form a navigation plane. Such a user gesture may be detected by a leap motion sensor, an acceleration sensor, and a gyroscope sensor.

Thereafter, a navigation plane is detected from the user gesture (105). In operation 105, first, data sufficient to form a single plane is extracted from the detected user gesture. For example, three points that do not exist on the same straight line, two straight lines crossing each other and two straight lines parallel to each other may be extracted as the data. Thereafter, a plane is produced from the data, and the produced plane may be determined as a navigation plane generated by a user gesture. The navigation plane may be determined based on the navigation coordinate system determined in the initialization (operation 101).

When the navigation plane is detected, a sectional image existing in the volume coordinate system corresponding to the navigation coordinate system in which the navigation plane exists may be extracted (107). A volume image may represent a 3D ultrasonic image, and a sectional image may represent a 2D sectional image obtained at a random orientation of the 3D ultrasonic image. In general, several hundreds of sectional images may be extracted from a random axis of a single volume image. A single volume image may have a great number of axes if only satisfying an allowable resolution in a 3D space. A sectional image extracted from a volume image based on a navigation plane represents a sectional image having a location and an orientation in the volume coordinate system corresponding to a location and an orientation of the navigation plane in the navigation coordinate system.

Thereafter, the extracted sectional image may be visually displayed based on the volume coordinate system in the 3D view section of the display screen shown in FIG. 9 (109).

FIG. 11 is a flowchart showing an example of an initialization process (110) in a method of navigating sectional images of a volume image in accordance with an embodiment of the present disclosure. The initialization process (110) illustrates an example of an initialization process of the volume image navigation method 100 described in FIG. 10. The example illustrated in FIG. 11 includes an initialization scheme of simultaneously setting a volume reference surface and a navigation reference surface.

In the initialization process (110), first, an initialization command may be received as a user inputs a command by use a keyboard or a mouse (111). Thereafter, as the user makes a gesture to form a navigation plane by use of a hand of the user or a handheld device, a sensor detects the gesture (112), and a navigation plane is detected from the user gesture (113).

Thereafter, a sectional image corresponding to a random sectional image is extracted from a volume data, and the extracted sectional image is displayed on a display screen (114). A user compares the displayed sectional image with the navigation plane formed by the user gesture, thereby determining the sectional image and the navigation plane are suitable for reference surfaces (115). If the sectional image and the navigation plane are determined to be suitable as reference surfaces (Yes in operation 115), the user may input a reference surface setting command by use of a keyboard or a mouse. Accordingly, the sectional image displayed on the current screen is determined as a volume reference surface, and the currently detected navigation plane is determined as a navigation reference surface. The determined reference surfaces may be included and stored in the reference surface information 32 of FIG. 3 (116).

Meanwhile, if the sectional image and the navigation plane are not determined to be suitable as reference surfaces (No in operation 115), a user may change a gesture such that a navigation plane having another location and/or another orientation is detected (117). As the navigation plane is changed according to the change in a gesture, a new sectional image, which is changed from the previously displayed sectional image in response to change from the previously detected navigation plane to a current navigation plane, is extracted and displayed on the screen (118). Thereafter, the control flow returns to the operation (115) of determining whether the changed sectional image and the changed navigation plane are suitable as reference surface.

Although the initialization process has been described above in relation to the determining of the volume reference surface and the navigation reference surface, there may need to perform a matching in the initialization process, that is, a matching between a distance by which the location of a navigation plane (for example, coordinates of a certain corner of a navigation plane) is changed and an interval at which nearby sectional images are extracted. For example, when the location of the navigation plane is changed by 1mm, a sectional image corresponding to the adjacent next sectional image may be extracted.

FIG. 12 is a flowchart showing another example of an initialization process in a method of navigating sectional images of a volume image in accordance with an embodiment of the present disclosure. Different from FIG. 11 describing the initialization process (110) in which the volume reference surface and the navigation reference surface are simultaneously determined, FIG. 12 shows an initialization process (120) in which a volume reference surface is previously determined.

In the initialization process (120), first, an initialization command may be received as a user inputs a command by use of a keyboard or a mouse (121). Thereafter, as the user makes a gesture to form a navigation plane by use of a hand of the user or a handheld device, a sensor senses the gesture (123), and a navigation plane is detected from the user gesture (125). Thereafter, a reference surface, which is set in advance, is extracted from volume data (127), and the extracted volume reference surface is matched to the currently detected navigation plane, thereby determining the currently detected navigation plane as a navigation reference surface (129).

The components and units of the above described volume image navigation apparatus may be implemented using hardware including, for example, controllers, sensors, processors, generators, drivers, a circuit configured to perform a certain function, and other equivalent electronic components. In other ways, the components of the above described volume image navigation apparatus may be implemented using a combination of components of hardware, firmware and software of a computing device including a processor, a memory, a user input device and/or a presentation device. The memory is a computer readable storage medium that stores computer executable software, applications, program modules, routines, instructions and/or data that are coded to perform a certain task when executed by a processor. The processor may read and execute computer executable software, applications, program modules, routines, instructions and/or data that are included in a computer readable medium. The user input device may be a device enabling a user to input a command such that a processor executes a certain task or enabling a user to input data required to execute a certain task. The user input device may include a physical or virtual keyboard, a keypad, a key button, a mouse, a joystick, a trackball, a touch-sensitive input device or a microphone. The presentation device may include a display, a printer, a speaker or a vibration device.

The display units described above may visually display an image. The display units may include an LCD screen, an LED screen, a projector, and the like. The display unit may be included in a computing device including a processor that performs various steps described above or in a display device dedicated for visually displaying the image data received from a separate computing device.

Steps, procedures, processes for the volume image navigation method may be executed by hardware including a circuit configured to perform a certain function. In other ways, the volume image navigation method may be coded as computer executable instructions that are then executed by a processor of a computing device, so that the method is implemented. The computer executable instruction may include software, applications, modules, procedures, plug-in, programs, instructions and/or data structures. The computer executable instruction may be included in a computer readable medium. The computer readable medium includes a computer readable storage medium and a computer readable communication medium. The non-transitory computer readable storage medium may include a RAM, a ROM, a flash memory, an optical disk, a magnetic disk, a magnetic tape, a hard disk and solid state disk. The computer readable communication medium may represent computer executable instructions in which the volume image navigation method is coded in the form of a signal capable of being transmitted and received through a communication network.

The computing device may include various devices, such as a wearable computing device, a handheld computing device, a smartphone, a tablet, a laptop, a desktop, a personal computer and a server. The computing device may be a stand-alone type device. The computing device may include a plurality of computing devices that cooperate with each other through a communication network.

While this disclosure includes specific examples, it will be apparent to one of ordinary skill in the art that various changes in form and details may be made in these examples without departing from the spirit of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims.

## Claims

1. An apparatus for navigating through a volume image, the apparatus comprising:
a navigation plane detecting unit configured to generate a virtual plane in a navigation coordinate system in a real world from user gesture data, and determine the virtual plane as a navigation plane;
an extracting unit configured to extract a 2D sectional image corresponding to the navigation plane from 3D volume data, based on a reference surface of a volume coordinate system of a virtual world corresponding to a reference surface of the navigation coordinate system; and
a display unit configured to display the extracted sectional image.

2. The apparatus of claim 1, wherein the user gesture data comprises data obtained by detecting a motion of a user's hand via a sensor provided at a fixed location, or obtained by detecting an orientation of a handheld device held by a user's hand via a sensor provided in the handheld device.

3. The apparatus of claim 2, wherein the sensor comprises a depth camera.

4. The apparatus of claim 2, wherein:
the handheld device is provided in the form of an ultrasonic imaging probe, and
the navigation plane is generated by the handheld device at a location similar to that of an image which is photographed by the ultrasonic imaging probe.

5. The apparatus of claim 2, wherein:
the handheld device is provided in the form of an ultrasonic imaging probe;
the handheld device is used to provide for a user gesture of making contact with a phantom having a 3D shape corresponding to the volume data; and
the navigation plane is generated at a sectional location of the phantom corresponding to the volume data.

6. The apparatus of one of claims 1 to 5, wherein the reference surface of the navigation coordinate system and the reference surface of the volume coordinate system are correlated by associating a navigation reference surface determined by a navigation plane determined based on the user gesture in the navigation coordinate system with a volume reference surface determined by a sectional image among sectional images of the volume data in the volume coordinate system.

7. A method of navigating through a volume image, the method comprising:
generating a virtual plane in a navigation coordinate system in a real world from user gesture data detected by a sensor, and determining the virtual plane as a navigation plane;
extracting a 2D sectional image corresponding to the navigation plane from 3D volume data, based on a reference surface of a volume coordinate system of a virtual world corresponding to a reference surface of the navigation coordinate system; and
displaying the extracted sectional image.

8. The method of claim 7, wherein the user gesture data comprises data obtained by detecting a motion of a user's hand via a sensor provided at a fixed location.

9. The method of claim 7, wherein the sensed user gesture data comprises data obtained by detecting an orientation of a handheld device held by a user's hand via a sensor provided in the handheld device.

10. The method of claim 9, wherein:
the handheld device is provided in the form of an ultrasonic imaging probe, and
the navigation plane is generated by the handheld device at a location similar to that of an image which is photographed by the ultrasonic imaging probe.

11. The method of claim 9, wherein:
the handheld device is provided in the form of an ultrasonic imaging probe;
the handheld device is used to provide for a user gesture of making contact with a phantom having a 3D shape corresponding to the volume data; and
the navigation plane is generated at a sectional location of the phantom corresponding to the volume data.

12. The method of one of claims 7 to 11, wherein the reference plane of the navigation coordinate system and the reference surface of the volume coordinate system are correlated by associating a navigation reference plane determined by a navigation plane determined based on the user gesture in the navigation coordinate system with a volume reference surface determined by a sectional image among sectional images of the volume data in the volume coordinate system.

13. A computer-readable medium having instructions that, when performed by a processor, cause the processer to perform the steps of:
detecting a gesture to obtain coordinates of a navigation plane;
obtaining the coordinates of the navigation plane based on the detected gesture and extracting a 2D sectional image of a 3D volume image based on the coordinates; and
displaying the extracted sectional image.

14. The computer-readable medium of claim 13, wherein the step of detecting comprises detecting the coordinates of the navigation plane based on an orientation of a palm or one or more finger of a user's hand.

15. The computer-readable medium of claim 14, wherein the step of detecting comprises detecting a change in the orientation of the palm or the one or more finger; and the processor is configured to extract another 2D sectional image of the 3D volume image based on the change of the orientation.
